# EUROPEAN PATENT SPECIFICATION

(11) **EP 0 533 073 B1**
(45) Date of publication and mention of the grant of the patent: **27.03.1996**
(21) Application number: 92115614.7
(22) Date of filing: 11.09.1992
(51) Int. Cl.: G21C 3/07

(54) **Structural elements for a nuclear reactor fuel assembly**
Strukturbestandteile für Kernreaktorbrennstoffbündel
Eléments de structure pour assemblage de combustible de réacteur nucléaire

(30) Priority: 16.09.1991 US 760648
(43) Date of publication of application: 24.03.1993
(73) Proprietor: Siemens Power Corporation, Richland, WA 99352 (US)
(72) Inventor: Van Swam, Leo F.P., Richland, WA 99352 (US); Busch, Raymond A., Richland, WA 99352 (US)
(74) Representative: Fuchs, Franz-Josef, Dr.-Ing.

(56) References cited:
- EP-A- 0 154 559
- EP-A- 0 353 733
- US-A- 3 620 691
- US-A- 4 751 044
- PATENT ABSTRACTS OF JAPAN vol. 9, no. 171 (C-291)16 July 1985 & jp-a-60 043 450
- PATENT ABSTRACTS OF JAPAN vol. 10, no. 182 (C-356)(2238) 25 June 1986 & JP-A-61 030 681

## Description

### TECHNICAL FIELD

This invention relates to structural elements for nuclear reactors and more particularly to highly corrosion resistant structural elements for use in a nuclear reactor fuel assembly.

### BACKGROUND

Structural elements for nuclear fuel assemblies must be capable of surviving in an extremely harsh environment. These elements may include spacer strips and side plates, structural channels, water channels, water rods, guidetubes and possibly fittings and fastening devices. For example, a spacer strip maintains a plurality of fuel rods incorporated in a nuclear fuel assembly in an organized array. These structures must maintain their strength in a highly radioactive environment and be resistant to corrosion by the coolant circulating around the fuel rods at high temperature. Since these structures are in continuous contact with a coolant such as water and/or steam with, at times, small amounts of additives such as boric acid, lithium hydroxide, and other impurities, they are subject to severe corrosive stresses from oxidation at high temperature. Dissolved hydrogen may be present in the coolant, which may permeate into and react with the alloys forming the structures and cause weakening through embrittlement and/or by increasing the propensity for corrosion.

To reduce radioactive waste generation and increase efficiency, there is an increasing trend to produce fuel assemblies which have a longer burn-up life. To achieve this, the structural elements will be required to endure the harsh aqueous environment for longer periods of reactor operation, accordingly requiring the retention of their structural and corrosion resistant properties for those extended periods.

To meet these requirements, zirconium alloys are typically used in forming the structural elements for nuclear fuel assemblies. However, while some zirconium alloys have high strength, they are also susceptible to high corrosion rates in an agueous environment. Other zirconium alloys which are more corrosion resistant may not meet mechanical strength requirements. To date, these structures have typically been made of alloys, such as Zircaloy-2 or -4. Stainless steel and Inconel alloys have also been used, but these materials suffer from a high neutron capture cross section and therefore, are detrimental to high efficiency operation of the assemblies.

In U.S. Patent No. 4,751,044, a nuclear fuel cladding tube is described having two annular layers bonded to each other. An inner layer is composed of a zirconium base alloy and an outer layer is composed of a titanium base material which protects the zirconium from the corrosive environment of the reactor core coolant.

In U.S. Patent No. 3,620,691 a fuel rod structure is disclosed having a high strength zirconium inner layer, a gas diffusion-impeding material on the surface thereof and a highly corrosion-resistant zirconium layer surrounding the gas impeding layer.

Other fuel rod structures are disclosed in U.S. Patent Nos. 5,023,048, 4,675,153, 4,863,679, 4,610,842, 4,963,316 and 4,735,768. However, fuel rod cladding structures require application specific properties, since they are used to contain nuclear fuel pellets. Thus, fuel rods experience different environments on the inner and outer surfaces and do not serve the same purpose as structural elements in a nuclear reactor.

In commercial fuel rods, the cladding is formed by the above mentioned zirconium alloys Zircaloy-2 or Zircaloy-4 (Western technique) or zirconium alloyed with niobium (Russian technique). These alloys show a low absorption to thermal neutrons and a huge amount of statistical data is available regarding their behavior under nuclear reactor conditions. Much effort was directed to optimize the composition of these alloys, and the amounts of alloying components are given by specifications which define the nuclear reactor grade quality of zirconium, zircaloy and Zr Nb.

In EP-A-0 353 733 a structural element such as a spacer or a channel box surrounding a bundle of fuel rods is disclosed which has a three layer-structure. The surface layers which are in contact with the reactor cooling water are made of a high corrosion resistance Zr-based alloy containing 0,5 - 2,2 % Nb; 0,5 - 1,5 % Sn; and 0,1 - 0,8 % Mo, which is believed to give the element a sufficient strength. An intermediate layer of an high ductility alloy such as zircaloy is interposed between that surface layers in order to enhance the toughness of the element. But the presence of Mo gives the structural element an "exotic" character, since Mo is not a chemical element permitted in remarkable amounts by the specifications of reactor grade zirconium and zirconium alloys. There is only few or none experience how this alloying component would chemically and physically behave in the long term, expecially under the extreme conditions of a nuclear reactor (chemistry, radiation, high temperature and gradient of temperature, heat flux, mechanical load etc.).

### SUMMARY OF INVENTION

It is an object of the present invention to provide a structural element which has enhanced corrosion resistance and high mechanical and creep strength for use in a nuclear reactor.

It is another object to provide a structural element for use in a nuclear fuel assembly which is resistant to hydrogen absorption.

These and other objects of the present invention are achieved by providing a structural element for a nuclear fuel assembly comprising an inner layer composed of a high strength and creep resistant zirconium base alloy and outer layers covering the inner sheet, the outer layers composed of a corrosion resistant and hydrogen absorption resistant zirconium base alloy.

The inner layer and outer layers are metallurgically bonded continuously over their surfaces to assure integrity at the interface. Preferably, these layers are roll bonded or diffusion bonded into a unitary structure prior to fabrication into a structural element.

The outer layers consists of zirconium alloyed with niobium and/or alloy components which are already tested and permitted in zircaloy. However, the amount of tin in the outer layers is restricted to not more than one wt%.

### BRIEF DESCRIPTION OF THE DRAWINGS

- FIG 1: shows a structural element of the present invention in cross section.
- FIG 2: shows a composite plate or sheet of the present invention.

### DETAILED DESCRIPTON OF THE INVENTION

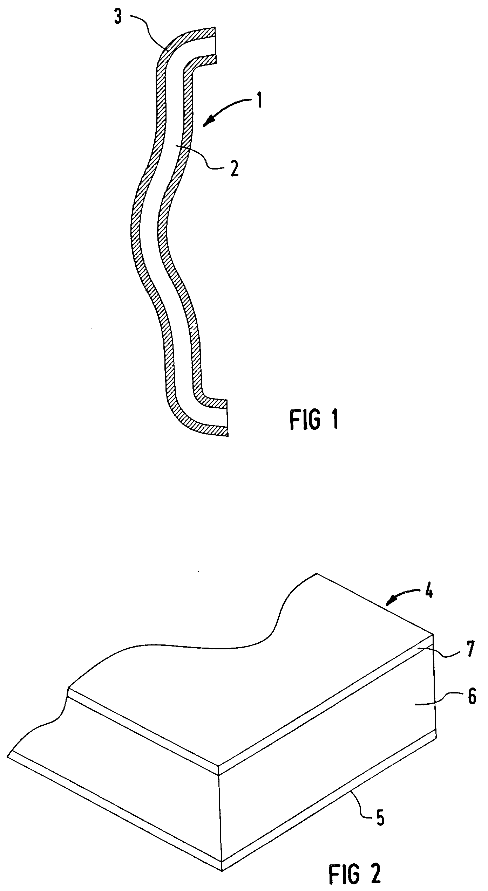

Referring to Fig. 1, a strip 1 has an inner layer 2 and an outer layer 3. The strip may be used in various structural elements of a nuclear fuel assembly, such as to provide a spacer strip which is used to maintain a plurality of nuclear fuel rod assemblies in an organized array. As such, due to its proximity to the nuclear fuel rods and the need to maintain an organized array under even extreme conditions to assure adequate cooling, the strip must have adequate mechanical strength and adequate creep properties. In addition, the strip must maintain these properties in a hot aqueous environment for extended periods of operation. Thus, long term resistance to corrosion, to hydrogen embrittlement and to neutron radiation is required.

The inner layer could be a zirconium base alloy such as Zircaloy-2 or -4. Such a material provides sufficient strength to survive under standard operating or accident conditions. The outer layers are preferably composed of a zirconium alloy which has higher corrosion resistance as compared to Zircaloy-2 or -4 and increased resistance to hydrogen absorption. Such a composite layer has the advantage of being easily formable into a structural element such as a channel or spacer strip. It can also be fabricated by welding into other structures without causing significant exposure of the inner sheet, as the corrosion resistant zirconium layer continues to cover the high strength inner layer. For purposes of this disclosure, the terms zirconium and zirconium alloy includes such small amounts of impurities which are typically encountered.

Referring again to Fig. 1, the inner layer 2 is formed of Zircaloy-2 or -4. Zircaloy-2 contains 1.2-1.7% by weight tin, 0.07-0.2% iron, 0.05-0.15% chromium, 0.03-0.08% nickel, 0.07-0.15% oxygen and balance zirconium and incidental impurities. Zircaloy-4 contains 1.2-1.7% tin, 0.18-0.24% iron, 0.7-0.13% chromium, 0.1-0.16% oxygen and the balance zirconium and incidental impurities. Other alloys useable as the inner layer are zirconium alloys with about 0-2% tin, 0-10% niobium, 0-0.5% Fe, 0-0.2% Cr, 0-0.2% Ni, 0.05-0.20% oxygen and small amounts of impurities as may typically be encountered in nuclear grade zirconium sponge. Impurities within the normal range for commercial reactor grade sponge zirconium are Aluminum 75 ppm or less, Boron 0.5 ppm or less, Cadmium 0.5 ppm or less, Carbon 270 ppm or less, Chromium 200 ppm or less, Cobalt 20 ppm or less, Copper 50 ppm or less, Hafnium 100 ppm or less, Iron 1500 ppm or less, Hydrogen 25 ppm or less, Oxygen 900 ppm or less, Magnesium 20 ppm or less, Manganese 50 ppm or less, Molybdenum 50 ppm or less, Nickel 70 ppm or less, Nitrogen 65 ppm or less, Silicon 120 ppm or less, Tin 50 ppm or less, Titanium 50 ppm or less, Tungsten 100 ppm or less, and Uranium (total) 3.5 ppm or less. Of course, other zirconium base alloys having the desired structural properties could be used.

The strip outer layer 3 is formed of a corrosion resistant zirconium alloy. For example, about 0.5% tin, 0.4% iron, balance zirconium and incidental impurities, or about 0.8% tin, 0.2% iron, 0.1% chromium, balance zirconium and incidental impurities; or about a 0.5% tin, 0.2% iron, 0.1% chromium, balance zirconium alloy and incidental impurities could be used. Other alloys usable include a zirconium-niobium alloy such as zirconium with about 0.5-3% niobium or zirconium alloys having about 0-3% niobium, 0-1.0% tin, 0-0.5% iron, 0-0.3% chromium, 0-0.3% nickel, 0.05-0.20% oxygen, and the balance zirconium and incidental impurities.

Zirconium alloys that resemble the composition of Zircaloy-2 or -4, but which have a much lower tin concentration (below approximately 1% tin by weight) are preferred as they have shown very good corrosion resistance in pressurized water reactor environments. The good corrosion resistance also loads to very low hydrogen pick-up levels. Alloys containing niobium are also preferred as they have shown increased resistance to modular corrosion frequently observed in water cooled reactors.

The inner layer 2, constructed of either Zircaloy-2 or -4, or other compositions as indicated above, are bonded to the outer layers 3 composed of the corrosion resistant alloy. Various types of metallurgical bonding processes may be used such as rolling, extrusion, hot pressing, explosive bonding or diffusion bonding. The sheets are bonded continuously over their surfaces.

Referring to Fig. 2, a plate 4 is fabricated by placing a first outer sheet 5, an inner sheet 6 and a second outer sheet 7 together as a stack. The edges of the stack are then welded together to bond the outer sheets together to prevent oxidation in between the layers during bonding. The stack is then heated and rolled in a conventional rolling mill to bond the sheets together into an integral structural plate or sheet.

The relative thicknesses of the sheet 6 to the sheets 5 and 7 may be, for example, about 80% to 10% to 10%, respectively. From about 4-25% of the overall sheet thickness could be comprised of each of the outer sheets (balance, about 50-92% being the inner sheet). While the outer sheets may be of equal thickness, they need not be, and depending on the exposure of the surface, a relatively thicker sheet could be put on one side of the central sheet and a thin sheet on the other side. For example, if one side of the structural element will experience, in addition to coolant contact, significant wear, a relatively thicker surface sheet is provided on this side for prolonged corrosion protection. Typically outer sheets 5 and 7 would be of the same alloy composition although there may be instances where dissimilar alloys are favored.

When used as a spacer strip for supporting a plurality of fuel rods for a nuclear fuel assembly, the inner layer has a thickness of about 0,127 to 0,762 mm (0.005 to 0.030 inch) to provide sufficient structural strength to withstand the mechanical forces which could be encountered. This inner layer is essentially not exposed to contact with the coolant fluid, since the outer sheet is nearly continuous thereover.

At the edges of the strip, the surface area of the inner layer exposed to the coolant is very small, and since the inner layer has at least moderate resistance to corrosion, the overall corrosion rate of the strip and the hydrogen absorption rate are only minimally affected.

While in the preferred embodiments of the present invention, a spacer strip is described, it will be understood by those skilled in the art that various other structural elements usable in a nuclear reactor may be produced according to the present invention.

## Claims

1. A structural element for use in a nuclear reactor consisting essentially of an inner layer composed of a high strength zirconium alloy and outer layers substantially covering the inner layer, the outer layers composed of a single highly corrosion and hydrogen absorption and permeation resistant zirconium alloy, the inner layer and the outer layers metallurgically bonded continuously over their contacted surfaces to produce an integral structural element, wherein the outer layers consist of zirconium and one or more alloy components, said alloy components being Niobium and /or alloy components permitted in zircaloy, and the amount of tin in the outer layers is not more than 1 wt%.

2. The element of claim 1 wherein the inner layer is a zirconium alloy comprising 1.2 - 1.7 % by weight tin, 0.07 - 0.2 % iron, 0.05 - 0.15 % chromium, 0.03 - 0.08 % nickel, 0.07 - 0.15 % oxygen, 0 - 0.012 % silicon, and 0 - 0.027 % carbon.

3. The element of claim 1 wherein the inner layer is a zirconium alloy comprising 1.2 - 1.7 % tin, 0.18 - 0.24 % iron, 0.07 - 0.13 % chromium, 0.1 - 0.16 % oxygen, 0 - 0.12 % silicon, and 0 - 0.027 % carbon.

4. The element of claim 1 wherein the inner layer is a zirconium-niobium alloy or zirconium-tin alloy with about 0 - 2 % tin and 0 - 10 % niobium.

5. The element of claim 4 wherein the inner layer contains additionally at least one of up to 0,5 % iron, up to 0,2 % chromium, up to 0,2 % nickel, up to 0,2 % oxygen; ballance zirconium and small amounts of other chemical elements permitted in nuclear grade zirconium sponge.

6. The element of one of claims 1 to 5 wherein the structural element consists of zirconium alloyed with Niobium and/or at least one of the alloy components of zircaloy, balance zirconium and impurities such as permitted in nuclear grade zirconium sponge.

7. The element of one of claims 1 to 6 wherein the outer layers comprise a zirconium alloy having about 0.1 - 1.0 % tin, 0.1 - 0.5 % iron.

8. The element of one of claims 1 to 6 wherein the outer layers comprise a zirconium alloy having about 0.1 - 1.0 % tin, 0.05 - 0.5 % iron, 0.02 - 0.2 % chromium.

9. The element of one of claims 1 to 6 wherein the outer layers comprise a zirconium alloy having about 0.1 - 1.0 % tin, 0.05 - 0.2 % chromium.

10. The element of one of claims 1 to 6 wherein the outer layers comprise a zirconium alloy having about 0.1 - 1.0 % tin, 0.05 - 0.5 % iron, 0.01 - 0.20 % nickel.

11. The element of one of claims 1 to 6 wherein the outer layers are a zironium alloy containing about 1.0 - 3.0 % niobium.

12. The element of claim 1 wherein the outer layers comprise a zirconium alloy having about 0.5 - 3.0 % niobium, preferably 1.0 - 3.0 % niobium, 0 - 1 % tin, 0 - 0.5 % iron, 0 - 0.3 % chromium, 0 - 0.3 % nickel.

13. The element of one of claims 1 to 12 wherein the amount of oxygen in the outer layers is between about 0.05 and 0.2 %.

14. The element of one of claim 1 to 13 wherein the inner and outer layers are metallurgically bonded by hot rolling.

15. The element of one of claims 1 to 14 wherein the inner layer comprises from about 50 - 92 % of the overall thickness of the element.

16. The element of claim 15 wherein the inner layer comprises about 80 % of the overall thickness of the element.

17. The element of one of claims 1 to 16 wherein the inner and outer layers are metallurgically bonded by a process selected from the group consisting of rolling, extrusion, hot pressing, explosive bonding and diffusion bonding.

## Patentansprüche

1. Strukturelement zur Verwendung in einem Kernreaktor, bestehend im wesentlichen aus einer inneren Schicht aus einer hochfesten Zirkoniumlegierung sowie äußeren Schichten, die die innere Schicht im wesentlichen bedecken und aus einer einzigen hochkorrosions- und wasserstoffabsorptions- und permeationsbeständigen Zirkoniumlegierung sind, wobei die innere Schicht und die äußeren Schichten durchgehend über ihre in Berührung stehenden Oberflächen metallurgisch verbunden sind, um ein eine Einheit bildendes Strukturelement zu erzeugen, in dem die äußeren Schichten aus Zirkonium und mindestens einem Legierungsbestandteil sind, wobei es sich bei den Legierungsbestandteilen um Niob und/oder in Zircaloy zugelassene Legierungsbestandteile handelt und der Zinngehalt in den äußeren Schichten nicht über 1 Gew.-% liegt.

2. Element nach Anspruch 1, in dem die innere Schicht eine Zirkoniumlegierung mit 1,2-1,7 Gew.-% Zinn, 0,07-0,2% Eisen, 0,05-0,15% Chrom, 0,03-0,08% Nickel, 0,07-0,15% Sauerstoff, 0-0,012% Silizium und 0-0,027% Kohlenstoff ist.

3. Element nach Anspruch 1, in dem die innere Schicht eine Zirkoniumlegierung mit 1,2-1,7% Zinn, 0,18-0,24% Eisen, 0,07-0,13% Chrom, 0,1-0,16% Sauerstoff, 0-0,12% Silizium und 0-0,027% Kohlenstoff ist.

4. Element nach Anspruch 1, in dem die innere Schicht eine Zirkonium-Niob-Legierung oder Zirkonium-Zinn-Legierung mit etwa 0-2% Zinn und 0-10% Niob ist.

5. Element nach Anspruch 4, in dem die innere Schicht zusätzlich mindestens einen der folgenden Bestandteile enthält: bis zu 0,5% Eisen, bis zu 0,2% Chrom, bis zu 0,2% Nickel, bis zu 0,2% Sauerstoff; Rest Zirkonium und kleine Mengen an anderen, in nuklearreinem Zirkoniumschwamm zugelassenen chemischen Elementen.

6. Element nach einem der Ansprüche 1-5, in dem das Strukturelement aus mit Niob und/oder mindestens einem der Legierungsbestandteile von Zircaloy legiertem Zirkonium besteht, Rest Zirkonium und solche Verunreinigungen, wie sie in nuklearreinem Zirkoniumschwamm zugelassenen sind.

7. Element nach einem der Ansprüche 1-6, in dem die äußeren Schichten aus einer Zirkoniumlegierung mit etwa 0,1-1,0% Zinn, 0,1-0,5% Eisen bestehen.

8. Element nach einem der Ansprüche 1-6, in dem die äußeren Schichten aus einer Zirkoniumlegierung mit etwa 0,1-1,0% Zinn, 0,05-0,5% Eisen, 0,02-0,2% Chrom bestehen.

9. Element nach einem der Ansprüche 1-6, in dem die äußeren Schichten aus einer Zirkoniumlegierung mit etwa 0,1-1,0% Zinn, 0,05-0,2% Chrom bestehen.

10. Element nach einem der Ansprüche 1-6, in dem die äußeren Schichten aus einer Zirkoniumlegierung mit etwa 0,1-1,0% Zinn, 0,05-0,5% Eisen, 0,01-0,20% Nickel bestehen.

11. Element nach einem der Ansprüche 1-6, in dem die äußeren Schichten eine Zirkoniumlegierung mit etwa 1,0-3,0% Niob sind.

12. Element nach Anspruch 1, in dem die äußeren Schichten aus einer Zirkoniumlegierung mit etwa 0,5-3,0% Niob, vorzugsweise 1,0-3,0% Niob, 0-1% Zinn, 0-0,5% Eisen, 0-0,3% Chrom, 0-0,3% Nickel bestehen.

13. Element nach einem der Ansprüche 1-12, in dem der Sauerstoffgehalt in den äußeren Schichten zwischen etwa 0,05 und 0,2% liegt.

14. Element nach einem der Ansprüche 1-13, in dem die metallurgische Verbindung der inneren und äußeren Schichten durch Heißwalzen erfolgt.

15. Element nach einem der Ansprüche 1-14, in dem die innere Schicht etwa 50-92% der Gesamtdicke des Elements ausmacht.

16. Element nach Anspruch 15, in dem die innere Schicht etwa 80% der Gesamtdicke des Elements ausmacht.

17. Element nach einem der Ansprüche 1-16, in dem die metallurgische Verbindung der inneren und äußeren Schichten durch ein aus der Reihe Walzen, Extrudieren, Heißpressen, Explosionsplattieren und Diffusionsplattieren ausgewähltes Verfahren erfolgt.

## Revendications

1. Un élément de structure prévu pour l'utilisation dans un réacteur nucléaire, consistant essentiellement en une couche intérieure constituée d'un alliage de zirconium à haute résistance mécanique, et en des couches extérieures recouvrant pratiquement la couche intérieure, les couches extérieures étant constituées d'un seul alliage de zirconium ayant une excellente résistance à la corrosion et à l'absorption et à la pénétration d'hydrogène, la couche intérieure et les couches extérieures étant liées de façon métallurgique et continue sur leurs surfaces en contact, pour produire un élément de structure d'un seul tenant, dans lequel les couches extérieures consistent en zirconium et en un ou plusieurs composants d'alliage, ces composants d'alliage étant le Niobium et/ou des composants d'alliage autorisés dans le Zircaloy, et la quantité d'étain dans les couches extérieures n'est pas supérieure à 1% en poids.

2. L'élément de la revendication 1, dans lequel la couche intérieure consiste en un alliage de zirconium comprenant 1,2 à 1,7% en poids d'étain, 0,07 à 0,2 % de fer, 0,05 à 0,15% de chrome, 0,03 à 0,08% de nickel, 0,07 à 0,15% d'oxygène, 0 à 0,012% de silicium et 0 à 0,027% de carbone.

3. L'élément de la revendication 1, dans lequel la couche intérieure consiste en un alliage de zirconium comprenant 1,2 à 1,7% d'étain, 0,18 à 0,24% de fer, 0,07 à 0,13% de chrome, 0,1 à 0,16% d'oxygène, 0 à 0,12% de silicium et 0 à 0,027% de carbone.

4. L'élément de la revendication 1, dans lequel la couche intérieure consiste en un alliage zirconium-niobium ou en un alliage zirconium-étain, avec environ 0 2% d'étain et 0 à 10% de niobium.

5. L'élément de la revendication 4, dans lequel la couche intérieure contient en outre au moins un composant parmi du fer en une proportion allant jusqu'à 0,5%, du chrome en une proportion allant jusqu'à 0,2%, du nickel en une proportion allant jusqu'à 0,2%, de l'oxygène en une proportion allant jusqu'à 0,2%; le reste consistant en zirconium et en faibles quantités d'autres éléments chimiques qui sont autorisés dans de l'éponge de zirconium de qualité nucléaire.

6. L'élément de l'une des revendications 1 à 5, dans lequel l'élément de structure consiste en zirconium allié avec du Niobium et/ou l'un au moins des composants d'alliage du Zircaloy, le reste consistant en zirconium et en impuretés telles que celles qui sont autorisées dans une éponge de zirconium de qualité nucléaire.

7. L'élément de l'une des revendications 1 à 6, dans lequel les couches extérieures consistent en un alliage de zirconium contenant environ 0,1 à 1,0% d'étain et 0,1 à 0,5% de fer.

8. L'élément de l'une des revendications 1 à 6, dans lequel les couches extérieures consistent en un alliage de zirconium contenant environ 0,1 à 1,0% d'étain, 0,05 à 0,5% de fer et 0,02 à 0,2% de chrome.

9. L'élément de l'une des revendications 1 à 6, dans lequel les couches extérieures consistent en un alliage de zirconium comprenant environ 0,1 à 1,0% d'étain et 0,05 à 0,2% de chrome.

10. L'élément de l'une des revendications 1 à 6, dans lequel les couches extérieures consistent en un alliage de zirconium comprenant 0,1 à 1,0% d'étain, 0,05 à 0,5% de fer et 0,01 à 0,20% de nickel.

11. L'élément de l'une des revendications 1 à 6, dans lequel les couches extérieures consistent en un alliage de zirconium contenant environ 1,0 à 3,0% de niobium.

12. L'élément de la revendication 1, dans lequel les couches extérieures consistent en un alliage de zirconium contenant environ 0,5 à 3,0% de niobium, et de préférence 1,0 à 3,0% de niobium, 0 à 1% d'étain, 0 à 0,5% de fer, 0 à 0,3% de chrome et 0 à 0,3% de nickel.

13. L'élément de l'une des revendications 1 à 12, dans lequel la quantité d'oxygène dans les couches extérieures est comprise entre environ 0,05 et 0,2%.

14. L'élément de l'une des revendications 1 à 13, dans lequel les couches intérieure et extérieures sont liées de façon métallurgique par laminage à chaud.

15. L'élément de l'une des revendications 1 à 14, dans lequel la couche intérieure représente environ 50 à 92% de l'épaisseur globale de l'élément.

16. L'élément de la revendication 15, dans lequel la couche intérieure représente environ 80% de l'épaisseur globale de l'élément.

17. L'élément de l'une des revendications 1 à 16, dans lequel la couche intérieure et les couches extérieures sont liées de façon métallurgique par un procédé qui est sélectionné dans le groupe comprenant le laminage, l'extrusion, le matriçage à chaud, le soudage par explosion et le soudage par diffusion.
